# EUROPEAN PATENT APPLICATION

(11) **EP 2 199 118 A1**
(43) Date of publication of application: **23.06.2010**
(21) Application number: 09176209.6
(22) Date of filing: 17.11.2009
(51) Int. Cl.: B60D 1/06, B60D 1/52, B60D 1/62

(54) **Tow bar**

(30) Priority: 20.11.2008 IT RM20080620
(71) Applicant: Ing. Plini e Gigliotti S.R.L., 00157 Roma (IT)
(72) Inventor: Plini, Piero, 00157, ROMA (IT); Gigliotti, Paolo, 00157, ROMA (IT); Fabretti, Sergio, 00157, ROMA (IT)
(74) Representative: Leone, Mario

(57) **Abstract**

A tow bar structure (1), of the kind assembled at the rear body of a vehicle (A) and intended for the hooking of a trailer, allows to simplify the electrical connection between the vehicle electrical circuitry and the tow bar structure with the assembly of a minimum number of electrical contacts, and comprises: a projecting hook (2); a electrical contact holder device (3) associated to said hook (2); a slave control unit (12) associated to the hook (2) suitable to exchange electrical signals con a master control unit (13) located inside the vehicle (A), managing the electrical commands to be transferred to the trailer and suitable to activate a plurality of electronic switches associated to the electrical contact holder in the tow bar structure; and an electrical connection allowing the exchange of signals between said master (13) and slave (12) control units and the supply of electrical power to be delivered through said contact holder device (3).

## Description

The present invention relates to a tow bar structure, in particular of the kind assembled at the rear body of a vehicle and intended for the hooking of a trailer.

This kind of hooks not only requires suitable sturdiness and reliability for their intended uses, but also some practical requirements to be satisfied.

These can be referred to the possibility of disassembling the hook and to the need of transferring the trailer a series of electrical commands, e.g., for activating luminous signals, brakes and other devices in the trailer, in response to ad a command sent by vehicle.

The above mentioned needs can be separately satisfied. In particular, the hook structure can be provided with a reversible locking system, which can be unlocked allowing to release the projecting part of the hook, i.e. the hook out-and-out, from the seat thereof which remains fixed to the vehicle. Moreover, the structure could comprise an electrical contact holder device, normally female, suitable to be engaged in a respective electrical contact holder device in the trailer.

The European patent No. 646,482 B1 describes a particular exemplificative embodiment of a tow bar structure, wherein the contact holder device is integral to the hook removable portion, and wherein this removable portion, being tube-shaped, comprises a further electrical contact holder device therein, intended to engage a respective electrical contact holder device housed in the seat of the hook removable part.

Accordingly, once said removable part is unlocked, it is possible to separate it from the vehicle, in a single step, both in the mechanical part projecting from the hook, and in the electrical part, i.e. the external contact holder device, and covering the seat of the removable part with any cover.

Although this technical solution is very advantageous, it has a constructional limit represented by the little space available within the hook removable part and the respective seat, compared to the number of electrical contacts required in order to transfer all the electrical commands required by the trailer, each formed by a plug and a respective socket.

More in general, the number of the electrical connections required for transmitting the electrical commands from the vehicle to trailer causes the electrical part of a tow bar structure to be more and more complex, the setting-up thereof becoming harder and harder.

The technical problem underlying the present invention is to provide a tow bar structure allowing to overcome the drawbacks mentioned above with reference to the known art.

Such problem is solved by a hook structure as mentioned above, **characterized in that** it comprises:
- a slave control unit associated to the hook, suitable to receive electrical signals from a master control unit located inside the vehicle, managing the electrical commands to be transferred to the trailer, and suitable to activate a plurality of electronic switches associated to the electrical contact holder device in the tow bar structure; and
- an electrical connection allowing the exchange of signals between said master and slave control units, and the supply of electrical power to be delivered through said electrical contact holder device.

The main advantage of the tow bar structure according to the present invention lies in that it simplifies the electrical connection between the vehicle electrical circuitry and the tow bar structure, requiring the assembly of a minimum number of electrical contacts.

The present invention will be hereby described according to a preferred exemplificative embodiment thereof, given by way of a non-limiting example, with reference to the annexed figures, wherein:

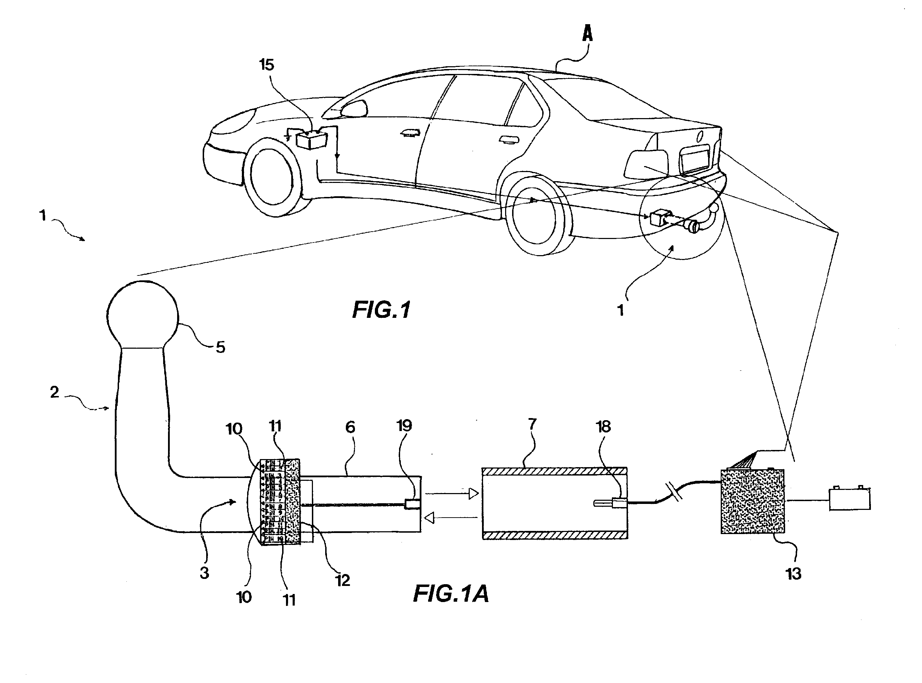

- figure 1 shows a perspective view of a vehicle provided with a tow bar structure according to the present invention;
- figure 1A shows a schematic sectional view of the structure of figure 1;

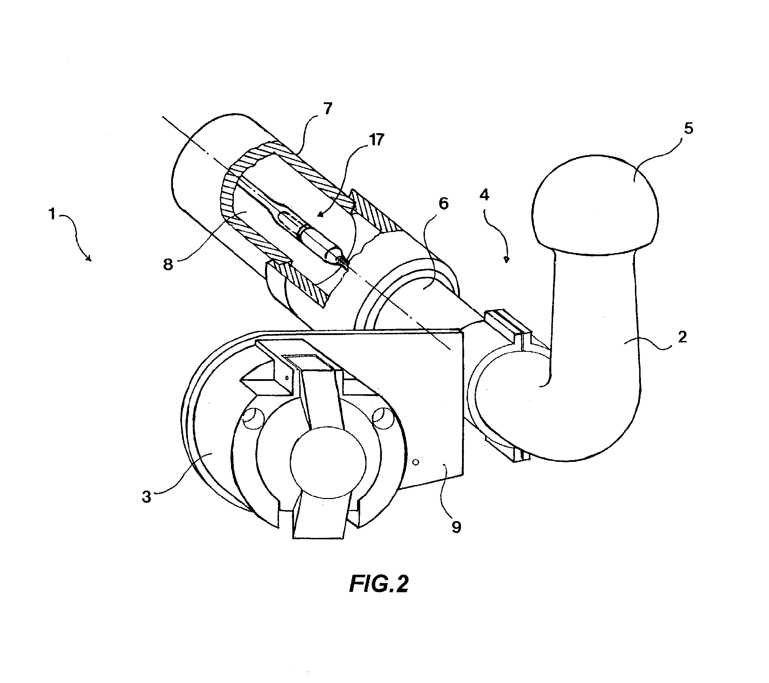

- figure 2 shows a partially sectional perspective schematic view of the tow bar structure of figure 1; and

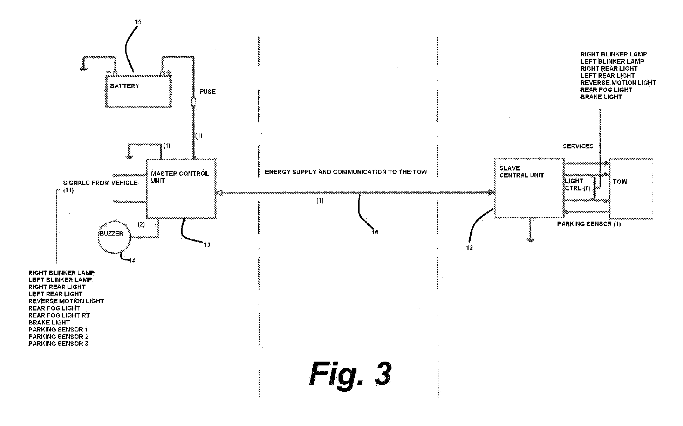

- figure 3 shows a block diagram showing the electrical connection required for the tow bar structure of figure 1.

With reference to the figures, it will be hereby described a tow bar structure, overall shown with the reference number 1, of the kind that is mounted on the rear body of a vehicle A, and that is intended for the hooking of a trailer which is not shown.

It comprises a hook 2, projecting from the rear of the vehicle A, and a female electrical contact holder device 3, suitable to be engaged to a respective electrical contact holder device in the trailer, which is not shown.

In particular, this exemplificative embodiment of tow bar structure is of the kind wherein the hook 2 is removable from the structure 1 and, to this regard, the hook 2 is provided on a removable part 4 supporting also further elements that will be described in detail in the following.

The hook 2, which is typically pipe-shaped, is formed by a tubular element having an end knob 5, onto which the trailer socket element (not shown) rests. The socket element is opposed to an insertion portion 6, intended to be engaged in a seat 7 connected to the vehicle A.

The insertion portion 6 and the seat 7 are tube-shaped, and the former is intended to be inserted in the latter. Once they are engaged, the seat 7 and the insertion portion 6 represent an interconnection area 8.

The above mentioned coupling is made suitable for towing a trailer by means of suitable locking means, e.g. a bayonet connection or a clamp on the insertion portion 6. Anyhow, such means could be of the conventional kind.

The electrical contact holder device 3 is mounted on a lateral projection 9 of the above mentioned removable part 4. It houses a plurality of electrical contacts 10 which are female, in the present exemplificative embodiment. A respective switch 11 is associated to each of them.

The device 3 is associated to a control unit 12 that, as will be better described in the following, is a slave unit, i.e. slaved to a respective master or main control unit 13.

Such slave control unit 12, also called electrical box, controls the activation of said electronic switches 11 processing commands provided by electrical signals exchanged with the master control unit 13.

The latter is housed inside the vehicle A and it is suitably added thereto.

The master control unit 13 can be provided with an acoustic and/or luminous signal 14 alerting on possible malfunctioning of the trailer signal devices.

It is connected to an electrical power supply 15, e.g. the vehicle A battery, and it is suitable to exchange signals with the slave control unit 12.

Therefore, both control units 12, 13 are connected by means of an electrical connection for exchanging said signals and for supplying electrical power to the trailer, through said electrical contact holder device 3.

In the present exemplificative embodiment, both function are incorporated in a single-wire connection 16 connecting the master control unit 13 to the slave control unit 12, i.e. a single unipolar cable.

Accordingly, the power supply is performed at low voltage, generally 12 V DC, while also the signals are transmitted through a data flow in the single unipolar cable. Advantageously, the single-wire 16 passes through the seat 7 and the insertion portion and it is directed to the electrical contact holder device 3.

Anyhow, it should be clear that even two distinct connection could be provided for power and data respectively, placed along the same path but this will represent a drawback in term of cost effectiveness and efficiency of the connection.

In the present exemplificative embodiment, at said interconnection area 8, the system 1 comprises a connection interface 17, formed by a plug 18 integral to the seat 7 intended to engage in a socket 19 integral to the insertion portion.

The plug 18 and the socket 19 are placed such that they can be engaged simply by inserting the insertion portion 6 in the seat 7, in case with the help of suitable guides, not shown.

Accordingly, the coupling between the removable portion 4 and vehicle rear occurs in a single step, even with reference to the connection for data exchange and for supplying electrical power.

Therefore, this kind of electrical connection requires a substantially reduced space, thus easily contained in the interconnection area 8. A similar remark will be also valid if a series of electrical contacts instead of a single one should be housed.

Therefore, this system could be useful for managing and power supplying also trailers requiring a great number of contacts in the electrical contact holder device.

In particular, the system allow to easily manage devices electrical contact holder having 13 pins (electrical contacts) and up to a maximum of 20 electrical contacts required for controlling indicators, side or rear lamps, braking lights, rear fog lamps, reversing light, parking sensors and so on.

Moreover, the connection between the removable part and the vehicle should be sturdier as a smaller port will be available for the passage of the electrical connection.

To the above described tow bar structure a person skilled in the art, in order to satisfy further and contingent needs, could effect several further modifications and variants, all however encompassed in the protective scope of the present invention, as defined by the appended claims.

## Claims

1. Tow bar structure (1) of the kind assembled at the rear body of a vehicle (A) and intended for the hooking of a trailer; having a projecting hook (2) and an electrical contact holder device (3) associated to said hook (2), **characterized in that** it comprises:
• a slave control unit (12) associated to the hook (2), suitable to exchange electrical signals with a master control unit (13) located inside the vehicle (A), managing the electrical commands to be transferred to the trailer, and suitable to activate a plurality of electronic switches associated to the electrical contact holder device in the tow bar structure; and
• an electrical connection allowing the exchange of signals between said master (13)and slave (12) control units, and the supply of electrical power to be delivered through said electrical contact holder device (3).

2. Tow bar structure (1) according to claim 1, wherein the hook (2) is removable and it is formed on a removable part (4), locking means to the tow bar structure (1) being provided, the contact holder device (3) being assembled on the removable part (4).

3. Tow bar structure (1) according to claim 2, wherein the hook (2) has an insertion portion (6) intended to be engaged in a seat (7) of the tow bar structure (1) connected to the vehicle (A).

4. Tow bar structure (1) according to claim 3, wherein the insertion portion (6) and the seat (7) are tube-shaped to be engaged to each other so as to form an interconnection area (8).

5. Tow bar structure (1) according to any of the preceding claims, wherein the electrical contact holder device (3) allocates a plurality of electrical contacts (10) each associated to a respective switch (11), the slave control unit (12) controlling the activation of said switches (11) upon exchanging appropriate electric signals with the master control unit (13).

6. Tow bar structure (1) according to any of the preceding claims, wherein said electrical connection is implemented by a single unipolar cable (16).

7. Tow bar structure (1) according to claim 6, wherein said electrical connection comprises a connection interface (17), consisting of a plug (18) and a socket (19).

8. Tow bar structure (1) according to claim 3, wherein said electrical connection (16) is carried through the seat (7) and the insertion portion (6) and routed to the contact holder device (3).

9. Tow bar structure (1) according to claims 7 and 8, wherein the plug (18) and the socket (19) are joint with both the seat (7) and the insertion portion (6) and are placed so that the engagement is carried out by inserting the insertion portion (6) in the seat (7).

10. Tow bar structure (1) according to any of the preceding claims, wherein the contact holder device (13) comprises up to 20 pin.
